# EUROPÄISCHE PATENTSCHRIFT

(11) **EP 1 884 303 B1**
(45) Veröffentlichungstag und Bekanntmachung des Hinweises auf die Patenterteilung: **29.02.2012**
(21) Anmeldenummer: 07014418.3
(22) Anmeldetag: 23.07.2007
(51) Int. Cl.: B23B 31/40, B23Q 3/18

(54) **Verfahren zum Zentrieren von Werkstücken sowie Vorrichtung zur Durchführung eines solchen Verfahrens**
Method for centring workpieces and device for performing such a method
Procédé destiné à centrer des pièces à usiner tout comme dispositif destiné à la réalisation d'un tel procédé

(30) Priorität: 31.07.2006 DE 102006036140
(43) Veröffentlichungstag der Anmeldung: 06.02.2008
(73) Patentinhaber: Gebr. Heller Maschinenfabrik GmbH, 72622 Nürtingen (DE)
(72) Erfinder: Roth, Werner, 73252 Lenningen (DE); Hartl, Werner, 72141 Walddorf-Häslach (DE)
(74) Vertreter: Jackisch-Kohl, Anna-Katharina

(56) Entgegenhaltungen:
- EP-A- 0 442 456
- DE-A1- 19 523 787
- DE-U1- 20 320 084

## Beschreibung

Die Erfindung betrifft ein Verfahren zum Zentrieren von Werkstücken nach dem Oberbegriff des Anspruches 1 sowie eine Vorrichtung zur Durchführung eines solchen Verfahrens nach dem Oberbegriff des Anspruches 20.

Damit Werkstücke auf Bearbeitungsmaschinen mit hoher Genauigkeit und Qualität bearbeitet werden können, ist eine genaue Zentrierung des Werkstückes in der Bearbeitungsmaschine erforderlich. Es ist bekannt, für die Zentrierung der Werkstücke an einer Bearbeitungsmaschine eine Zentriereinheit vorzusehen, in der das zu bearbeitende Werkstück zentriert wird. Hierfür wird ein Zentrierdorn verwendet, der expandierende Zentrierelemente aufweist. Sie werden an das Werkstück angelegt, das auf diese Weise zentriert wird. Nachdem das Werkstück zentriert und anschließend gespannt ist, wird es einer Bearbeitungsstation der Bearbeitungsmaschine zugeführt. Da zum Zentrieren eine eigenständige Zentriereinheit an der Bearbeitungsmaschine vorgesehen ist, ist die Maschine entsprechend aufwendig ausgebildet und teuer. Da das Werkstück nach der Zentrierung und Einspannung aus der Zentriereinheit in die Bearbeitungslage gebracht werden muß, wird eine erhebliche Zeit benötigt zwischen dem Zentrieren und der Bearbeitung des Werkstückes.

Bei einem bekannten Verfahren (EP-A-0 442 456) wird auf den in die Spindel eingesetzten Zentrierdorn ein Werkstück aufgesetzt. Das Werkstück wird an der Außenseite bearbeitet.

Bei einem anderen bekannten Verfahren (DE 203 20 084 U1) wird das

Werkstück ebenfalls auf einen mit einer Spindel einer Werkzeugmaschine verbundenen Zentrierdorn aufgesetzt.

Es ist ferner ein Handhabungswerkzeug bekannt (DE 195 23 787 A1), das spannbackenartige Greifelemente aufweist, die mit Aufnahmebohrungen für Greiferstifte versehen sind. Je nach gefordertem Greifdurchmesser werden die Greiferstifte in die entsprechenden Aufnahmebohrungen der Greifelemente eingesetzt. Mit dem Handhabungswerkzeug werden die Werkstücke zu oder von einer Bearbeitungsposition oder zum Umspannen oder Ausrichten von einer Spannvorrichtung in eine andere transportiert.

Der Erfindung liegt die Aufgabe zugrunde, das gattungsgemäße Verfahren und die gattungsgemäße Vorrichtung so auszubilden, dass die Werkstücke in einfacher Weise schnell und genau zentriert werden können.

Diese Aufgabe wird durch ein Verfahren mit den Merkmalen des Anspruches 1 und durch eine Vorrichtung mit den Merkmalen des Anspruches 20 gelöst.

Beim erfindungsgemäßen Verfahren wird der Zentrierdorn in die Spindel der Bearbeitungsmaschine eingesetzt. Um die Zentrierelemente zu betätigen, werden der Zentrierdorn und der Spannkegel relativ zueinander verdreht. Der Zentrierdorn wird während der Spindelrotation drehfest zum Maschinengestell abgestützt. In die Spindel der Bearbeitungsmaschine können nach dem Zentrieren und Spannen des Werkstückes die Werkzeuge eingesetzt werden, mit denen das Werkstück anschließend bearbeitet werden soll. Dadurch ist eine Ortsverlagerung des Werkstückes nach der Zentrierung und der Einspannung für die Bearbeitung nicht notwendig, so dass die Werkstücke innerhalb kurzer Zeit bearbeitet werden können. Da eine Verlagerung des Werkstückes nach dem Zentriervorgang nicht erforderlich ist, bleibt die Ausrichtung zwischen dem zentrierten Werkstück und der Spindel der Bearbeitungsmaschine für den nachfolgenden Bearbeitungsvorgang beibehalten, so dass eine genaue und hochqualitative Bearbeitung des Werkstückes gewährleistet ist. Besonders vorteilhaft ist, dass zum Beispiel die Bohrung, in der das Werkstück zentriert worden ist, in der gleichen Aufspannung bearbeitet wird. Das Werkstück weist zur Aufnahme des Zentrierdorns eine Bohrung auf, so dass das Werkstück von innen zentriert wird. Da das Werkstück nach dem Zentrieren und Spannen für die nachfolgende Bearbeitung nicht verlagert wird, sondern in derselben Aufspannung wie zum Zentrieren auch die Bearbeitung erfolgt, kann die Werkstückbohrung in derselben Aufspannung durch entsprechende Werkzeuge bearbeitet werden.

Vorteilhaft wird der Zentrierdorn automatisch in die Spindel eingewechselt.

Vorteilhaft ist, den Zentrierdorn in einem Werkzeugmagazin zu lagern. Dann wird er diesem Werkzeugmagazin entnommen.

Damit der Zentrierdorn während der Bearbeitung des Werkstückes mittels der Werkzeuge nicht den bei der Bearbeitung anfallenden Spänen, Kühlschmierstoffen und dergleichen ausgesetzt ist, ist das Werkzeugmagazin vorteilhaft in W-Richtung verfahrbar. Diese Verfahrbarkeit hat auch den Vorteil, dass das Werkzeugmagazin zum Einwechseln des Zentrierdorns in Richtung auf die Spindel der Bearbeitungsmaschine verfahren werden kann, so dass für den Einwechselvorgang nur wenig Zeit benötigt wird.

Um den Einwechselvorgang des Zentrierdornes mit hoher Genauigkeit und dennoch einfach durchführen zu können ist die Spindel zumindest in einer Achsrichtung, vorzugsweise in X- und in Y-Richtung, verfahrbar. Die Spindel kann dann für den Einwechselvorgang so verfahren werden, dass sie den Zentrierdorn aus dem Werkzeugmagazin vorteilhaft im Pick-up-Verfahren unmittelbar aufnehmen kann. In gleicher Weise kann der Zentrierdorn innerhalb kurzer Zeit der Spindel entnommen und im Werkzeugmagazin abgelegt werden. Da das Ein- und Auswechseln des Zentrierdorns vor der Bearbeitung des Werkstückes erfolgt, kann das Werkzeugmagazin nach dem Einwechseln des Zentrierdorns in die Spindel in seiner Übergabestellung stehen bleiben, so dass nach der Zentrierung und nach dem Einspannen des Werkstückes der Zentrierdorn rasch im Werkzeugmagazin abgelegt werden kann.

Grundsätzlich ist es auch möglich, den Zentrierdorn mittels einer Greifeinrichtung in die Spindel einzuwechseln bzw. ihr zu entnehmen. Die Greifeinrichtung kann mit der Spindel verfahrbar sein; sie kann auch am Werkzeugmagazin angeordnet werden.

Das Werkstück wird im Bearbeitungsraum der Bearbeitungsmaschine zentriert. Hierbei befindet sich das Werkstück vorteilhaft auf einem Werkstücktisch der Bearbeitungsmaschine.

Ist die Spindel nur in X- und in Y-Richtung verstellbar, dann ist der Werkstücktisch in Z-Richtung verfahrbar. Die Verfahrbarkeit in Z-Richtung kann aber auch in die Spindel gelegt sein, so dass der Werkstücktisch in diesem Falle ortsfest angeordnet sein kann. Der Werkstücktisch kann aber ebenfalls in Z-Richtung verfahrbar sein, selbst wenn die Spindel auch in dieser Richtung verfahrbar ist.

Sobald das Werkstück zentriert ist, wird es schwimmend gespannt. Dadurch verbleibt das Werkstück nach dem Zentrieren in seiner Lage innerhalb der Bearbeitungsmaschine, so dass anschließend ohne Verlagerung des Werkstückes die Bearbeitung begonnen werden kann.

Sobald das Werkstück gespannt ist, wird der Zentrierdorn entfernt, der Spindel entnommen und in die Spindel das für die nachfolgende Bearbeitung des Werkstückes notwendige Werkzeug eingewechselt. Die Spindel dient somit nicht nur zur Betätigung des Zentrierdorns bzw. seiner Zentrierelemente, sondern auch zum Antrieb der Bearbeitungswerkzeuge.

Die Werkzeuge werden vorteilhaft im Pick-up-Verfahren dem Werkzeugmagazin entnommen. Die Spindel und das Werkzeugmagazin werden zu diesem Zweck in die notwendige Lage verfahren, so dass die Spindel das Werkzeug dem Werkzeugmagazin entnehmen kann.

Die Werkzeuge können aber auch mittels einer Greifeinrichtung dem Werkzeugmagazin entnommen und in die Spindel eingewechselt werden. Die Greifeinrichtung kann die gleiche sein, die auch für das Ein- und Auswechseln des Zentrierdorns eingesetzt wird. Grundsätzlich ist es aber auch möglich, für die Werkzeuge eine andere Greifeinrichtung als für den Zentrierdorn zu verwenden. Die Greifeinrichtung für die Werkzeuge kann spindelseitig, aber auch werkzeugmagazinseitig vorgesehen sein.

Vorteilhaft haben der Zentrierdorn und die Werkzeuge jeweils den gleichen HSK-Kegel, so dass mit einer einzigen Greifeinrichtung Zentrierdorn und Werkzeug erfaßt werden können. Die Verwendung einer HSK-Schnittstelle trägt zu einer optimalen Einspannung und zu einer hohen Bearbeitungsqualität bei.

Am Werkstück können verschiedene Bearbeitungen vorgenommen werden, beispielsweise unterschiedliche spanende Bearbeitungen, wie Bohren, Fräsen, Gewinden usw. Auch ist es möglich, mit Schleifwerkzeugen am Werkstück zu arbeiten. Die Bearbeitungsvorgänge und ihre Reihenfolge richten sich nach dem jeweiligen Anwendungsfall.

Vorteilhaft sind die Werkzeuge in einem solchen Fall im Werkzeugmagazin in der Reihenfolge gelagert, in der sie für die Bearbeitung des Werkstückes benötigt werden. Die Ein- und Auswechselzeiten werden dadurch gering gehalten.

Zweckmäßig ist die Zentrierachse des Werkstückes identisch mit der Spindelachse, so dass nach dem Zentrieren des Werkstückes bereits die genaue Zuordnung des Werkstückes zur Spindel gegeben ist.

Bei der erfindungsgemäßen Vorrichtung sind der Zentrierdorn und der Spannkegel relativ zueinander drehbar. Durch diese Relativdrehung können die Zentrierelemente betätigt werden. Hierfür ist eine Hauptspindel mit einer aufwändigen Verstelleinrichtung nicht mehr notwendig. Während der Spindelrotation ist der Zentrierdorn drehfest zum Maschinengestell abgestützt.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: eine Bearbeitungsmaschine zur Durchführung des erfindungsge- mäßen Verfahrens in Stirnansicht,
- Fig. 2: die Bearbeitungsmaschine gemäß Fig. 1 in Seitenansicht,
- Fig. 3: in schematischer Darstellung ein auf ortsfesten Vorauflagen gela- gertes Werkstück,
- Fig. 4 bis Fig. 11: verschiedene Positionen während des Zentrierens und Spannens sowie der Freigabe des Werkstückes,
- Fig. 12: in schematischer Darstellung und im Axialschnitt einen Zentrier- dorn einer nicht zur Erfindung gehörenden Vorrichtung,
- Fig. 13: in schematischer Darstellung und im Axialschnitt einen Teil einer weiteren Ausführungsform eines Zentrierdorns einer erfindungs- gemäßen Vorrichtung,
- Fig. 14a und Fig. 14b: unterschiedliche Stellungen von verstellbaren Anschlägen.

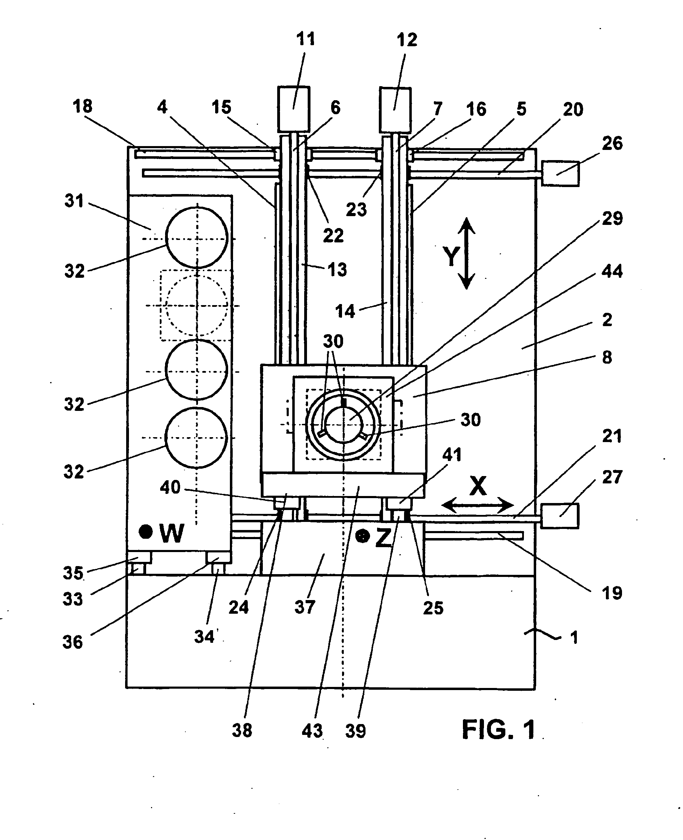

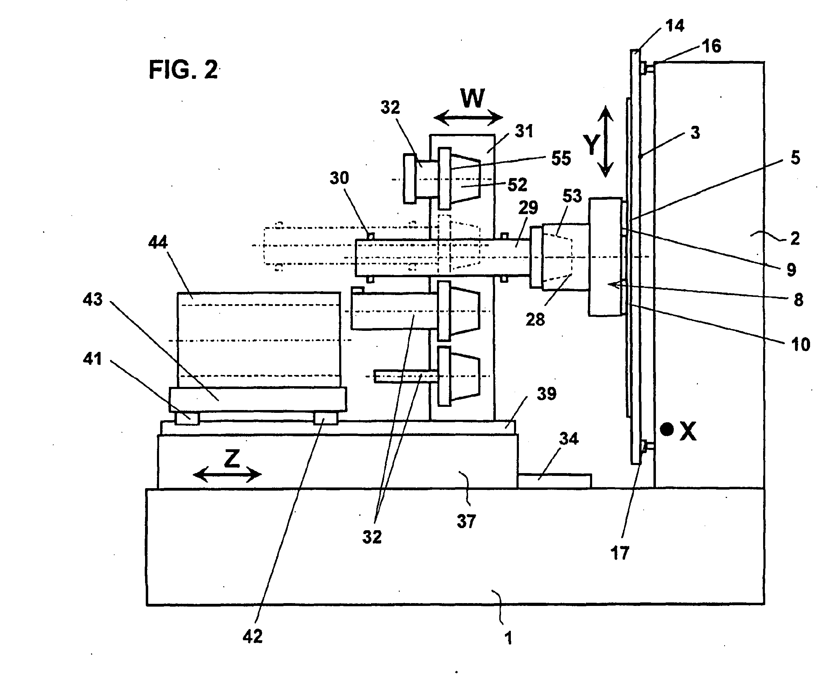

Die in den Fig. 1 und 2 nur beispielhaft dargestellte Bearbeitungsmaschine hat ein Gestell 1, auf dem sich ein Ständer 2 befindet. Er ist an einem Ende des Gestelles 1 vorgesehen und ist an seiner Vorderseite mit einer Y-Führung 3 versehen, die sich in vertikaler Richtung erstreckt und beispielhaft zwei mit Abstand nebeneinander liegende Führungsschienen 4, 5 aufweist. Vor den Führungsbahnen 4, 5 befindet sich jeweils eine Antriebsspindel 6, 7, mit denen ein Kreuzschlitten 8 in Y-Richtung verfahren werden kann. Der Kreuzschlitten 8 ist mit Führungsschuhen 9, 10 auf den Führungsbahnen 4, 5 gelagert und sitzt mit (nicht dargestellten) Spindelmuttern auf den Antriebsspindel 6, 7. Am oberen Ende der Antriebsspindel 6, 7 befindet sich jeweils ein Antriebsmotor 11, 12, mit dem die Antriebsspindeln 6, 7 je nach Verstellrichtung des Kreuzschlittens 8 in Y-Richtung drehbar angetrieben werden. Die Führungsbahnen 4, 5 befinden sich auf jeweils einem in Y-Richtung sich erstreckenden Träger 13, 14. Die beiden Träger 13, 14 ragen nach oben über den Ständer 2 und haben geringen Abstand vom Gestell 1.

Die beiden Träger 13, 14 sind an ihrer dem Ständer 2 zugewandten Rückseite nahe dem oberen und unteren Ende mit Führungsschuhen 15 bis 17 versehen, mit denen die Träger 13, 14 auf zwei parallel zueinander in X-Richtung sich erstreckende Führungsbahnen 18, 19 gelagert sind. Als Verschiebeantrieb in X-Richtung dienen zwei parallel zueinander liegende Antriebsspindeln 20, 21, auf denen die Längsträger 13, 14 mit Spindelmuttern 22, 23; 24, 25 gelagert sind. An einem, im Ausführungsbeispiel nach Fig. 1 am rechten Ende der Antriebsspindel 20, 21 sitzt jeweils ein Antriebsmotor 26, 27 zum Drehantrieb der Antriebsspindeln 20, 21. In Fig. 2 sind der Übersichtlichkeit wegen die Antriebe nicht dargestellt.

Der Kreuzschlitten 8 kann mittels der beschriebenen Antriebe in X- und in Y-Richtung verfahren werden. Mit den Antriebsmotoren 11, 12 und den Antriebsspindeln 6, 7 wird der Kreuzschlitten 8 in Y-Richtung längs der Führungsbahnen 4, 5 verschoben. Mittels der Antriebsmotoren 26, 27 und der Antriebsspindeln 20, 21 läßt sich der Kreuzschlitten 8 in X-Richtung verfahren, indem die Längsträger 4, 5 mittels der Führungsschuhe 15 bis 17 längs der Führungsbahnen 18, 19 verfahren werden.

Der Kreuzschlitten 8 trägt eine Hauptspindel 28, mit der ein Werkzeug oder im Ausführungsbeispiel ein Zentrierdorn 29 betätigt werden kann. Der Zentrierdorn 29 ist mit Expandierdornen 30 versehen. Der Zentrierdorn 29 ist in einem Werkzeugmagazin 31 gelagert, das vorteilhaft längs einer W-Achse auf dem Gestell 1 verfahrbar ist. Im Magazin 31 sind beispielhaft übereinander Werkzeuge 32 gelagert, die in bekannter Weise in die Hauptspindel 28 eingewechselt werden können. Ist das Werkzeugmagazin 31, wie im Ausführungsbeispiel dargestellt, längs der W-Achse verschiebbar, können die Werkzeuge 32 im Pick-up-Verfahren in die Hauptspindel 28 eingewechselt werden. Auch der Zentrierdorn 29 läßt sich in einem solchen Fall im Pick-up-Verfahren einwechseln.

Das Werkzeugmagazin 31 kann auch ortsfest auf dem Gestell 1 oder auch neben dem Gestell 1 angeordnet sein. Das Einwechseln der Werkzeuge 32 bzw. des Zentrierdorns 29 kann ferner über Doppelgreifer erfolgen, die in den Zeichnungen nicht dargestellt, jedoch an sich bekannt sind.

Das Werkzeugmagazin 31 ist in der dargestellten Ausführung für schwere Sonderwerkzeuge vorgesehen. Es kann auch ein (nicht dargestelltes) herkömmliches Werkzeugmagazin verwendet werden. Das Werkzeugmagazin 31 und ein herkömmliches Werkzeugmagazin können auch gleichzeitig an der Maschine vorgesehen sein.

Das Werkzeugmagazin 31 ist auf zwei parallel zueinander verlaufenden Führungsbahnen 33, 34 mittels Führungsschuhen 35, 36 gelagert geführt. Die Führungsbahnen 33, 34 sind auf dem Gestell 1 vorgesehen und erstrecken sich senkrecht zur X- und zur Y-Richtung. Zum Antrieb des Werkzeugmagazins 31 längs der W-Achse sind vorteilhaft Spindelantriebe vorgesehen, die ähnlich wie die beschriebenen Spindelantriebe zur Verstellung des Kreuzschlittens 8 in X- und in Y-Richtung ausgebildet, der Übersichtlichkeit wegen aber nicht dargestellt sind.

Auf dem Gestell 1 befindet sich eine Zwischenplatte 37, die fest auf dem Gestell 1 angeordnet ist und auf ihrer Oberseite zwei parallel zueinander liegende Führungsbahnen 38, 39 aufweist, die sich senkrecht zur X- und Y-Richtung in Z-Richtung erstrecken, die parallel zur W-Richtung liegt. Auf den Führungsbahnen 38, 39 ist mit Führungsschuhen 40 bis 42 ein Werkstücktisch 43 verschiebbar gelagert. Zum Antrieb des Werkstücktisches 43 in Z-Richtung dient wiederum ein (nicht dargestellter) Spindelantrieb, der prinzipiell gleich ausgebildet ist wie die Spindelantriebe für den Kreuzschlitten 8. Auf dem Werkstücktisch 43 wird ein zu bearbeitendes Werkstück 44 aufgespannt. In den Fig. 1 und 2 ist das Werkstück 44 unmittelbar auf dem Werkstücktisch 43 aufgespannt. Dies ist nur aus Vereinfachungsgründen gezeichnet worden. Anhand der nachfolgenden Figuren wird ersichtlich, daß das Werkstück 44 über unterschiedliche Auflagen auf dem Werkstücktisch 43 aufgespannt wird.

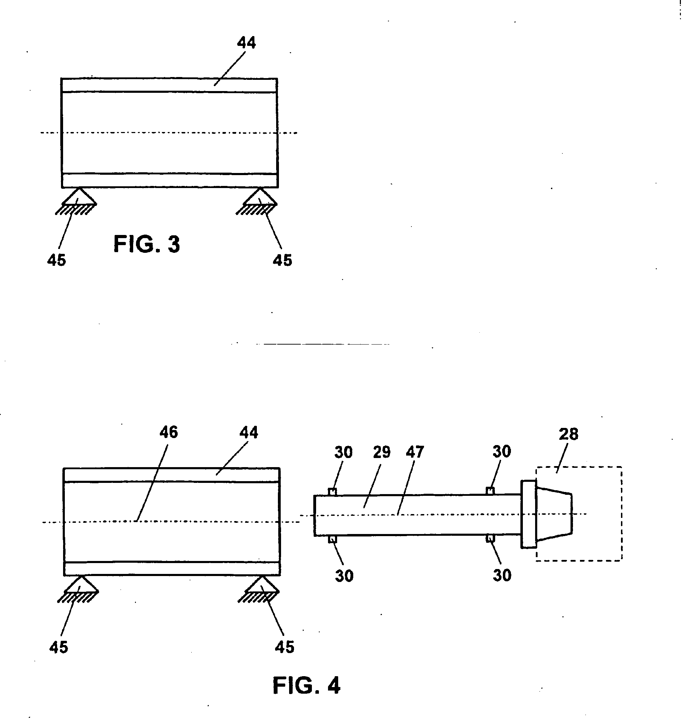

Wie sich aus Fig. 3 ergibt, wird das zu bearbeitende Werkstück 44 zunächst auf ortsfeste Vorauflagen 45 aufgelegt, die sich auf dem Werkstücktisch 43 befinden. Dem Werkzeugmagazin 31 wird der Zentrierdorn 29 entnommen und in die Hauptspindel 28 eingewechselt (Fig. 4). Der Zentrierdorn kann auch parallel zur Werkstückbeladung dem Werkzeugmagazin 31 entnommen werden, so daß unmittelbar nach der Auflage des Werkstückes 44 auf den Vorauflagen 45 der Zentriervorgang beginnen kann. Die Taktzeit kann dadurch reduziert werden. Der Zentrierdorn 29 hat die expandierbaren Zentrierdorne 30, die zunächst radial eingefahren sind. Mit dem Kreuzschlitten 8 wird die Hauptspindel 28 und damit der Zentrierdorn 29 außerhalb des Werkstückes 44 in X- und Y-Richtung so verschoben, daß der Zentrierdorn 29 in Z-Richtung gegenüber dem Werkstück 44 ausgerichtet ist. Wie Fig. 4 zeigt, hat der Zentrierdorn 29 noch axialen Abstand vom Werkstück 44. Die Achse 46 des Werkstückes 44 und die Längsachse 47 des Zentrierdorns 29 liegen nicht fluchtend zueinander, sondern haben einen radialen Versatz. Die Zentrierdorne 30 sind nahe dem vorderen und dem rückwärtigen Ende des Zentrierdorns 29 vorgesehen. Dabei sind jeweils drei Zentrierdorne 30 über den Umfang des Zentrierdorns 29 verteilt angeordnet, wie sich aus Fig. 1 ergibt. In Fig. 4 ist der jeweils untere Zentrierdorn 30 aus Vereinfachungsgründen in die Zeichenebene gedreht dargestellt.

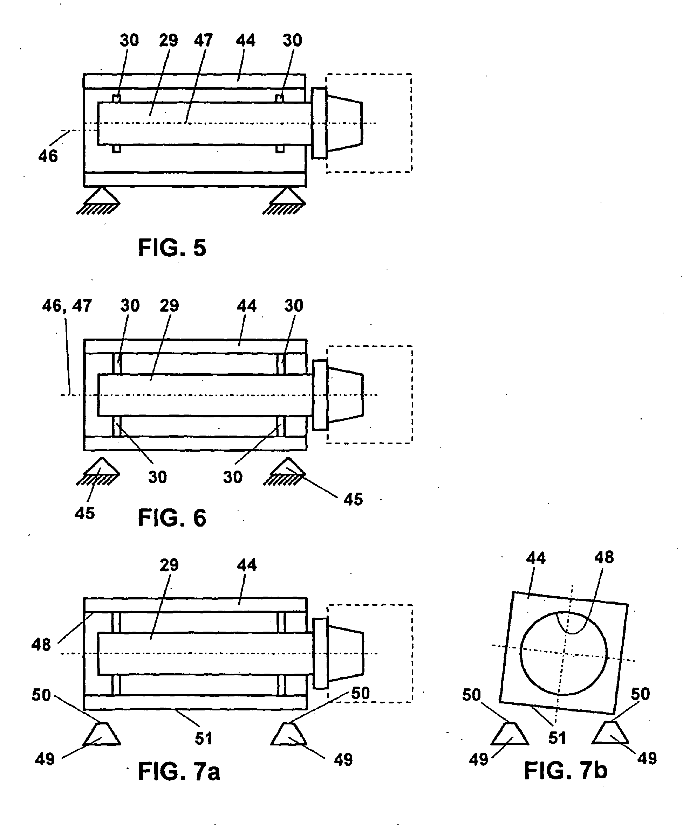

Fig. 5 zeigt die Lage, wenn der Zentrierdorn 29 mit den eingefahrenen Zentrierdornen 30 in das Werkstück 44 eingefahren ist. Hierzu wird das Werkstück 44 mittels des Werkstücktisches 43 in Z-Richtung so weit verschoben, bis sich der Zentrierdorn 29 in Z-Richtung in der richtigen Lage innerhalb des Werkstückes 44 befindet. Die Achsen 46 und 47 von Werkstück 44 und Zentrierdorn 29 weisen noch den radialen Versatz auf.

Das Werkstück 44 muß für die nachfolgende Bearbeitung in eine Lage gebracht werden, in der die Werkstückachse 46 mit der Achse 47 des Zentrierdorns 29 zusammenfällt. Um diese Lage zu erreichen, werden nunmehr die Zentrierdorne 30 radial ausgefahren. Sie legen sich an die Innenwand 48 des Werkstückes 44 an. Da die Zentrierdorne 30 in gleichem Maße ausgefahren werden, wird das Werkstück 44 um den radialen Versatz zwischen der Werkstückachse 46 und der Dornachse 47 von den Vorauflagen 45 abgehoben (Fig. 6). Nach der Zentrierung des Werkstückes 44 mittels der Zentrierdorne 30 ist das Werkstück 44 gegenüber dem Zentrierdorn 29 ausgerichtet, so daß die Achsen 46/47 zusammenfallen.

In dieser zentrierten und ausgerichteten Lage ist das Werkstück 44 noch nicht eingespannt. Aus diesem Grunde muß in nachfolgenden Schritten das Werkstück 44 in der ausgerichteten und zentrierten Lage verspannt werden.

Auf dem Werkstücktisch 43 befinden sich Spannauflagen 49 und Ausrichtauflagen 49a, von denen das Werkstück 44 nach dem Zentrieren noch Abstand hat. Die Vorauflagen 45 sind der Übersichtlichkeit wegen nicht dargestellt.

Wie sich aus Fig. 7b ergibt, kann es vorkommen, daß das Werkstück 44 beim Zentrieren mittels der Zentrierdorne 30 des Zentrierdorns 29 in Umfangsrichtung leicht verdreht wird. Die Verdrehung kann aber auch von Maßschwankungen der Werkstückkontur herrühren, wodurch das Werkstück 44 beim Auflegen auf die Vorauflagen 45 außerhalb der radialen Soll-Position zur Ablage kommt. Dies ist weder für den Zentriervorgang noch für den Spannvorgang nachteilig. Aufgrund der zylindrischen Innenwand 48 wird der Zentriervorgang mittels der Zentrierdorne 30 nicht beeinflußt.

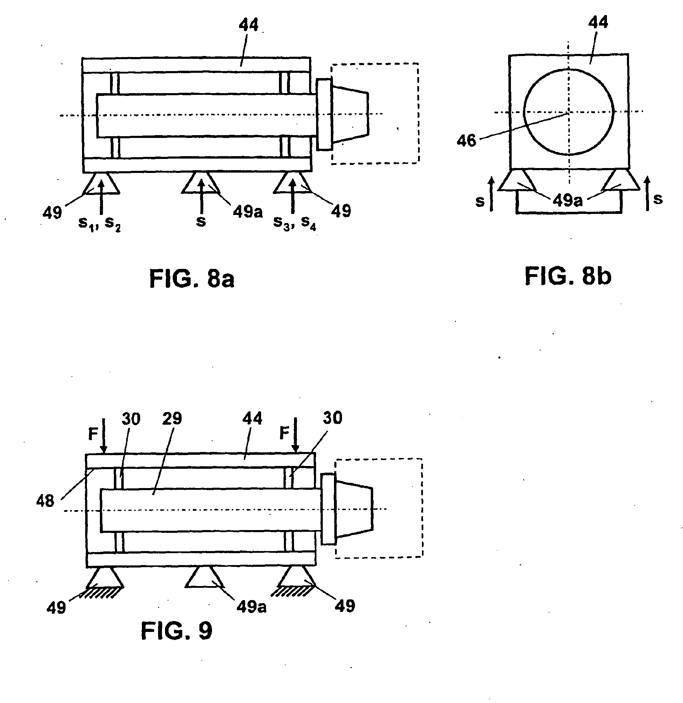

In einem nächsten Schritt werden die Ausrichtauflagen 49a an das Werkstück 44 angelegt (Fig. 8a und 8b). Im Ausführungsbeispiel liegen die Ausrichtauflagen 49a in halber Länge des Werkstückes 44 an. Mit den Ausrichtauflagen 49a wird das Werkstück 44 bezüglich der Radiallage ausgerichtet.

Vorteilhaft sind zwei Ausrichtauflagen (Fig. 8a) vorgesehen. Sie sind fest miteinander verbunden und legen den Weg s zurück, bis sie am Werkstück 44 anliegen. Es ist somit radial fixiert. Die Ausrichtauflagen 49a liegen mit Abstand einander gegenüber und definieren infolge ihrer festen Verbindung miteinander eine Soll-Position für die radiale Werkstücklage.

Nachdem die Ausrichtauflagen 49a am Werkstück 44 anliegen, werden die Spannauflagen 49 an das Werkstück 44 angelegt (Fig. 8a und 8b). Es sind vier Spannauflagen 49 vorgesehen, die paarweise einander gegenüberliegen und mit Abstand beiderseits der Ausrichtauflagen 49a vorgesehen sind. Jede Spannauflage 49 legt einen Weg s₁ bis s₄ zurück. Die Wegstrecken können jeweils unterschiedlich sein, was abhängig ist von der individuellen Werkstückkontur an der jeweiligen Auflagestelle. Die Spannauflagen 49 sind im Unterschied zu den Ausrichtauflagen 49a nicht fest miteinander verbunden, sondern können individuell verschiedene Wege s₁ bis s₄ zurücklegen. Die Spannauflagen 49 sind mit Auflageflächen 50 versehen (Fig. 7a und 7b), die an die Außenseite 51 des Werkstückes 44 im Auflagebereich angepaßt sind. Die Auflageflächen 50 der Spannauflage 49 sind im Ausführungsbeispiel eben, da die entsprechende Außenseite 51 des Werkstückes 44 eben verläuft. Bei einer entsprechend anderen Gestaltung der Werkstückaußenseite 51 kann die Auflagefläche 50 der Spannauflagen 49 eine entsprechend andere Gestaltung haben.

Nach dem Anlegen der Ausrichtauflagen 49a und der Spannauflagen 49 ist das Werkstück 44 nicht nur zentriert, sondern auch ausgerichtet. In dieser Lage werden die Spannauflagen 49 geklemmt, so daß sie beim nachfolgenden Spannvorgang nicht mehr bewegt werden können. Auch die Ausrichtauflagen 49a verbleiben am Werkstück 44 und werden nach dem Spannen nicht zurückgefahren. Nunmehr wird auf der den Spannauflagen 49 gegenüberliegenden Seite des Werkstückes 44 die Spannkraft F aufgebracht. Die Zentrierdorne 30 des Zentrierdorns 29 sind während dieses Spannvorganges immer noch ausgefahren und liegen an der zylindrischen Innenwand 48 des Werkstückes 44 an. Zum Einspannen des Werkstückes 44 werden die herkömmlichen Spanneinrichtungen verwendet, die aus diesem Grunde auch nicht näher dargestellt und beschrieben sind.

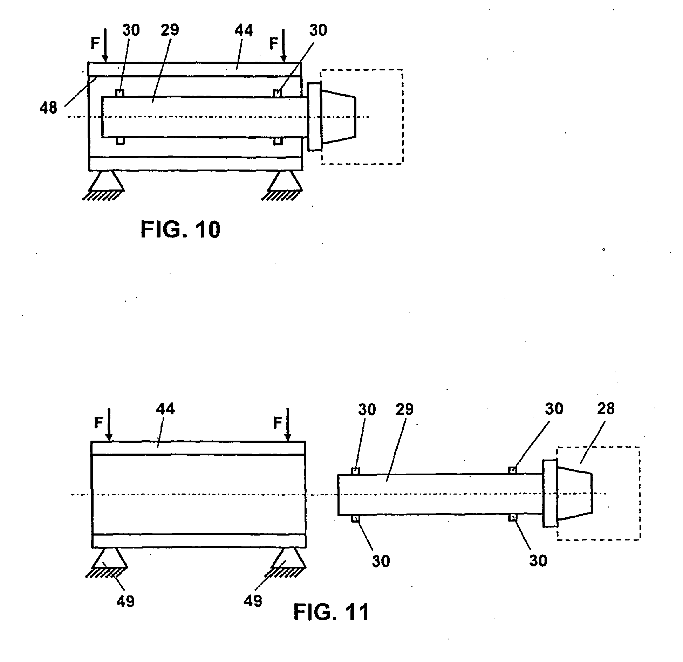

Sobald das Werkstück 44 eingespannt ist, werden die Zentrierdorne 30 eingefahren, so daß sie von der Innenwand 48 des Werkstückes 44 freikommen (Fig. 10). Da das Werkstück 44 fest eingespannt ist, wird seine Lage beim Einfahren der Zentrierdorne 30 nicht mehr verändert. Der Werkstücktisch 43 kann dann in Z-Richtung so weit zurückgefahren werden, daß sich der Zentrierdorn 29 mit den eingefahrenen Zentrierdornen 30 außerhalb des eingespannten Werkstückes 44 befindet (Fig. 11). Der Zentrierdorn 29 kann im Werkzeugmagazin 31 abgelegt werden.

Je nach Bearbeitung des Werkstückes 44 werden dann die erforderlichen Werkzeuge 32 aus dem Werkzeugmagazin 31 in die Hauptspindel 28 eingewechselt. Mit den Werkzeugen werden die erforderlichen Bearbeitungen am Werkstück 44 vorgenommen.

Im dargestellten Ausführungsbeispiel wird der Werkstücktisch 43 in Z-Richtung bewegt, während der Zentrierdorn 29 mittels des Schlittens 8 in X- und in Y-Richtung längs des Ständers 2 verfahren wird. Es ist selbstverständlich auch möglich, daß der Ständer 2 mit dem Schlitten 8 zusätzlich in Z-Richtung verschiebbar auf dem Gestell 1 angeordnet ist. In diesem Falle ist der Werkstücktisch 43 vorteilhaft fest auf dem Gestell 1 angeordnet. Darüber hinaus kann der Werkstücktisch 43 bei einer solchen Gestaltung zusätzlich zum Ständer 2 in Z-Richtung verfahrbar ausgebildet sein.

Sind die Bearbeitungsschritte am Werkstück 44 vorgenommen worden, wird die Spannkraft F aufgehoben, so daß das Werkstück 44 nicht mehr eingespannt ist, sondern lose auf den Spannauflagen 49 und den Ausrichtauflagen 49a aufliegt. Das bearbeitete Werkstück 44 kann dann in beliebiger Weise abtransportiert werden. Die Spannauflagen 49 und die Ausrichtauflagen 49a werden wieder in eine untere Position zurückbewegt. Nunmehr kann das nächste Werkstück 44 in der beschriebenen Weise zentriert, ausgerichtet und gespannt werden. Das Ein- und Auswechseln der Werkzeuge 32 sowie des Zentrierdorns 29 ist einfach möglich. Die Werkzeuge 32 und der Dorn 29 liegen im Werkzeugmagazin 31 in W-Richtung, also parallel zur Z-Richtung. Der Schlitten 8 mit der Hauptspindel 28 kann darum durch Verfahren in X- und in Y-Richtung in eine genaue Position bezüglich der Z-Richtung verfahren werden. Dann muß nur noch das Werkzeugmagazin 31 in W-Richtung gegen den Schlitten 8 gefahren werden. Das entsprechende Werkzeug 32 oder der Zentrierdorn 29 werden dann von der Hauptspindel 28 aufgenommen. Die Werkzeuge 32 und/oder der Zentrierdorn 29 sind vorteilhaft jeweils mit einem HSK-Kegel 52, 53 versehen, mit dem sie in einer HSK-Aufnahme 54 der Hauptspindel 29 aufgenommen werden. Das Werkzeug 32 und/oder der Zentrierdorn 29 liegen mit einer Radialfläche 55, 56 flächig an einer Stirnseite 57 der Hauptspindel 28 an. Das Werkzeug 32 und/oder der Zentrierdorn 29 werden durch die (nicht dargestellte) Spanneinrichtung fest mit ihrer Radialfläche 55, 56 gegen die Stirnseite 57 der Hauptspindel 28 gezogen.

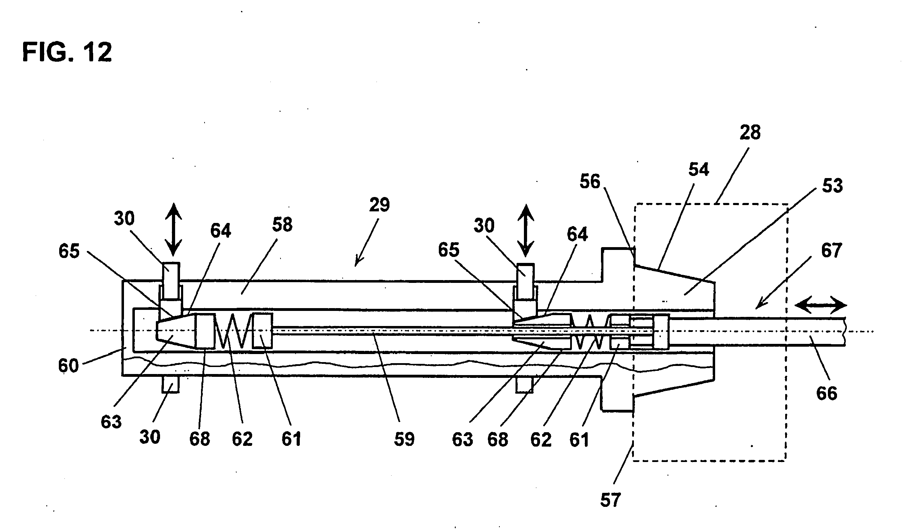

Der Zentrierdorn 29 hat ein Gehäuse 58, in dem axial und mittig eine Druckstange 59 verschiebbar gelagert ist (Fig. 12). Das Gehäuse 58 ist am freien Ende durch einen Boden 60 geschlossen. Am freien Ende der Druckstange 59 befindet sich ein Druckstück 61, an dem sich das eine Ende wenigstens einer Druckfeder 62 abstützt. Ihr anderes Ende liegt an einem Keil- oder Kegelstumpfelement 63 an, an dessen Mantelfläche 64 die Zentrierdorne 30 mit entsprechenden Gegenflächen 65 anliegen. Die Zentrierdorne 30 sind in Richtung auf ihre eingefahrene Stellung durch (nicht dargestellte) Federn belastet, so daß sie mit ihren Gegenflächen 65 stets gegen die Mantelfläche 64 des Elementes 63 gedrückt werden. An die Mantelfläche 64 schließt in Richtung auf das Druckstück 61 eine Zylinderfläche 68 an, die eine axiale Führungsfläche bildet.

Nahe dem HSK-Kegel 53 durchsetzt die Druckstange 59 ein weiteres Keil- oder Kegelstumpfelement 63, an dessen äußerer Mantelfläche 64 die Zentrierdorne 30 mit entsprechenden Gegenflächen 65 anliegen. An die Mantelfläche 64 schließt in Richtung auf den HSK-Kegel 53 die Zylinderfläche 68 an, die ebenfalls eine axiale Führungsfläche bildet. Die Zentrierdorne 30 sind in Richtung auf ihre eingefahrene Stellung federbelastet, so daß sie stets am Element 63 anliegen. Auch dieses Element 63 steht unter der Kraft wenigstens einer Druckfeder 62, die sich mit einem Ende am Keil- oder Kegelstumpfelement 63 und mit ihrem anderen Ende an der Stirnseite des Druckstückes 61 abstützt. Es wird von der Druckstange 59 zentral durchsetzt und ist an einer weiteren Druckstange 66 vorgesehen, die sich durch den HSK-Kegel 53 in die Hauptspindel 28 erstreckt und Teil einer Verstelleinheit 67 ist, die in der Hauptspindel 28 vorgesehen ist.

Die beiden Keil- oder Kegelstumpfelemente 63 sitzen relativ verschiebbar auf der Druckstange 59 und sind unabhängig voneinander axial verschiebbar. Dadurch ist gewährleistet, daß die den beiden Elementen 63 zugeordneten Zentrierdorne 30 unabhängig voneinander so weit ausgefahren werden können, bis sie an der Innenwand 48 des Werkstückes 44 zur Anlage kommen. So können beispielsweise die Zentrierdorne 30 des in Fig. 12 linken Elementes 63 im Bedarfsfall weiter radial ausgefahren werden als die Zentrierdorne 30 des rechten Elementes 63. Auf diese Weise können problemlos Durchmesserdifferenzen des Werkstückes 44 berücksichtigt werden.

In Fig. 12 sind die Zentrierdorne 30 in ihrer eingefahrenen Lage dargestellt, in der sie radial nur wenig über das Gehäuse 58 vorstehen. Sobald sich der Zentrierdorn 29 innerhalb des Werkstückes 44 befindet (Fig. 5), wird die Druckstange 66 in Fig. 12 nach links verschoben. Die Druckfedern 62 sind so ausgebildet, daß die Elemente 63 entsprechend nach links verschoben werden. Die Zentrierdorne 30 werden dadurch radial nach außen gefahren. Sobald der erste Zentrierdornsatz an der Innenwand 48 des Werkstückes 44 anliegt, kann die Druckstange 66 noch weiter nach links verschoben werden, bis auch der zweite Zentrierdornsatz an der Werkstückinnenwand 48 anliegt.

Soll die Zentrierung aufgehoben werden, wird die Druckstange 66 zurückgefahren. Die Druckfedern 62 sind mit ihren Enden vorteilhaft fest mit den Keil- bzw. Kegelstumpfelementen 63 und den Druckstücken 61 verbunden, so daß bei dieser Rückholbewegung auch die Keil- bzw. Kegelstumpfelemente 63 zurückbewegt und die Zentrierdorne 30 unter Federkraft radial nach innen gefahren werden.

Bei der beschriebenen Bearbeitungsmaschine dient die Hauptspindel 28 nicht nur zum Antrieb der einzuwechselnden Werkzeuge 32, sondern auch zur Betätigung des Zentrierdorns 29. Die Hauptspindel 28 enthält die Verstelleinheit 67, mit der die Druckstange 66 zum Ein- und Ausfahren der Zentrierdorne 30 betätigt wird. Der Zentrierdorn 29 wird in der beschriebenen Weise automatisch in die Hauptspindel 28 eingewechselt und im Magazin 31 bereitgestellt. Dadurch ist ein rascher Wechsel von Werkzeugen und Zentrierdorn gewährleistet.

Der Ausrichtvorgang, der Spannvorgang sowie der Bearbeitungsvorgang finden in der Maschine statt. Dabei befindet sich das Werkstück 44 stets auf dem Werkstücktisch 43. Dadurch können der Ausricht-, der Spann- und der anschließende Bearbeitungsvorgang in kurzer Zeit durchgeführt werden. Da für die Betätigung der Werkzeuge 32 und des Zentrierdorns 29 die Hauptspindel 28 herangezogen wird, ergibt sich eine weitere Vereinfachung und Beschleunigung des gesamten Verfahrens.

Im dargestellten Ausführungsbeispiel ist das Werkstück 44 ein Hohlkörper.
In diesem Falle erfolgt in der beschriebenen Weise die Zentrierung des Werkstückes 44 von innen. Beispiele für solche Werkstücke sind Gehäuse, wie etwa Getriebegehäuse von Kraftfahrzeugen. Die Werkstücke können aber auch von außen zentriert werden, wofür entsprechend anders gestaltete Ausrichteinrichtungen verwendet werden, welche solche Werkstücke übergreifen. Beispiele für derartige Werkstücke sind Lenkgehäuse oder Zylinderköpfe.

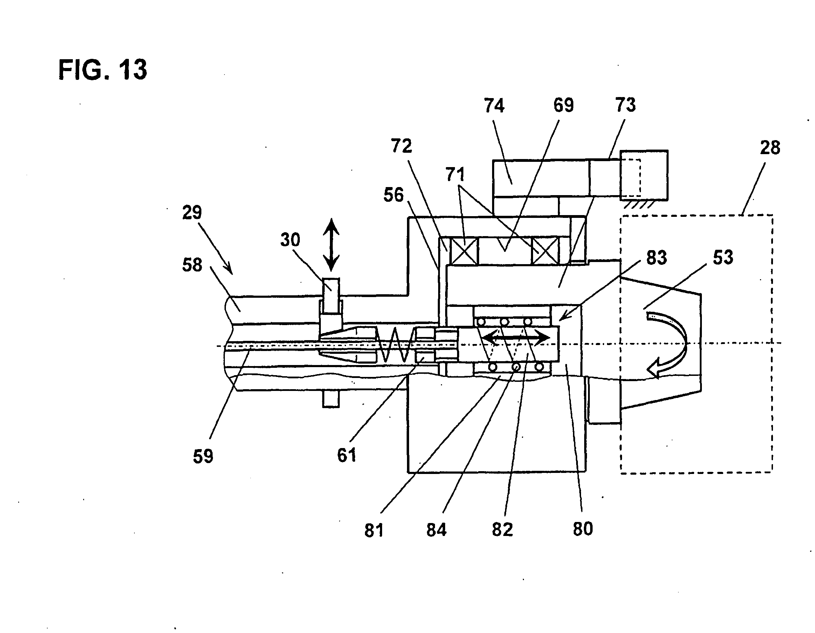

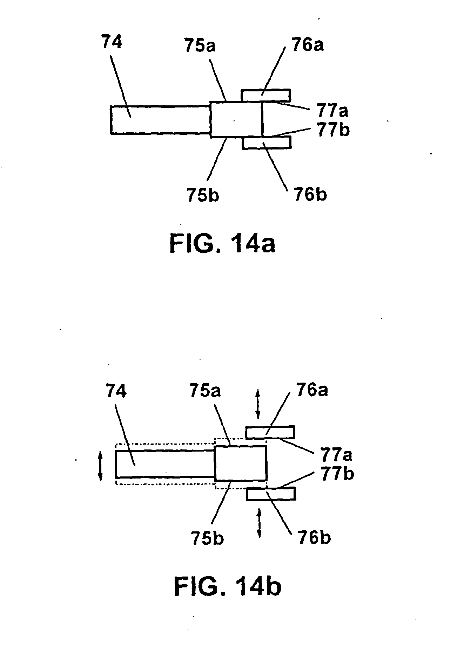

Bei der Ausführungsform gemäß Fig. 13 weist der Zentrierdorn 29 das Gehäuse 58 auf, in dem axial und mittig die Druckstange 59 verschiebbar gelagert ist. Die Betätigung der Druckstange 59 bewirkt in der anhand der vorigen Ausführungsform beschriebenen Weise eine Bewegung der Zentrierelemente 30. Das freie Ende des Zentrierdorns 29 ist in Fig. 13 nicht dargestellt. Der wesentliche Unterschied zum Ausführungsbeispiel nach Fig. 12 liegt in der Art der Erzeugung der Axialbewegung der Druckstange 59. Diese Axialbewegung wird durch die Rotation der Hauptspindel 28 bei gleichzeitig drehfest abgestütztem Gehäuse 58 des Zentrierdorns 29 erreicht. Die Relativdrehung zwischen dem Gehäuse 58 und der Hauptspindel 28 ermöglicht wenigstens ein Drehlager 71, das sich in einer Ausnehmung 72 zwischen einer Lagerbohrung 69 und einem Tragkörper 73 abstützt. Der Tragkörper 73 ist mit dem HSK-Kegel 53 in die Hauptspindel 28 eingespannt und erstreckt sich in die Ausnehmung 72. Das Drehlager 71 weist eine hohe Steifigkeit auf und ist in axialer Richtung unbeweglich. Mit dem Gehäuse 58 ist an der Außenseite ein Stützarm 74 fest verbunden. Er hat zwei Stützflächen 75a, 75b (Fig. 14a und 14b), die an korrespondierenden Anschlagflächen 77a, 77b zweier Anschläge 76a, 76b zur Anlage kommen. Die Anschläge 76a, 76b sind quer zur Spindelachse 59 durch (nicht dargestellte) gesteuert bewegbare Aktoren verstellbar. Diese Verstellfunktion dient zum einen der leichteren Einführung des Stützarms 74 zwischen die Anschlagflächen 77a, 77b beim Einwechseln des Zentrierdorns 29 in die Hauptspindel 28 und zum anderen einer begrenzten Verdrehbarkeit des Zentrierdorns 29 nach erfolgtem Zentriervorgang.

Der Tragkörper 73 weist eine Bohrung 80 auf, in welcher eine Spindelmutter 81 drehfest angeordnet ist. Die Spindelmutter 81 wirkt mit einer Gewindespindel 82 zusammen und bildet mit ihr einen Spindelantrieb 83. Bei einer besonders vorteilhaften Ausführungsform ist der Spindelantrieb 83 als ein mit Wälzkörpern 84 versehener spielfreier Kugelgewindetrieb ausgeführt.
Die Gewindespindel 82 ist bevorzugt einstückig drehfest verbunden mit der Druckstange 59 und dem Druckstück 61. Durch eine Relativdrehung zwischen der Hauptspindel 28 und dem Gehäuse 58 und damit durch eine Relativdrehung zwischen Spindelmutter 81 und Gewindespindel 82 bewegt sich die Gewindespindel 82 in axialer Richtung, ohne sich jedoch gegenüber dem Gehäuse 58 zu drehen. Auf diese Weise erfolgt die Axialbewegung von Druckstange 59 und Druckstück 61 und damit die Bewegung der Zentrierdorne 30 in radialer Richtung. Der Vorteil dieser Ausführungsform liegt darin, dass auf eine Hauptspindel mit einer aufwändigen Verstelleinrichtung über die Druckstange 66 verzichtet werden kann.

Bevor der Zentrierdorn 29 dem Werkzeugmagazin 31 (Fig. 1 und 2) entnommen wird, befinden sich die Anschläge 76a, 76b in ihrer offenen Stellung, das heißt sie weisen den maximal möglichen Abstand zueinander auf (Fig. 14b). Nach der Aufnahme des Zentrierdorns 29 in die Hauptspindel 28 werden die Anschläge 76a, 76b in die geschlossene Stellung gebracht (Fig. 14a), das heißt die Flächen 75a und 77a sowie 75b und 77b kommen mit einer definierten Kraft zur Anlage. Der Zentrierdorn 29 befindet sich damit in seiner radialen Sollposition, so dass die Zentrierdorne 30 beim Zentriervorgang auf den vorgesehenen Werkstückanlageflächen zur Anlage kommen. Der Zentriervorgang erfolgt in der zuvor beschriebenen Weise.

Im Unterschied zur Ausführungsform nach Fig. 12 kann sich das Werkstück 44 während des Zentriervorganges nicht verdrehen. Dennoch ist es erforderlich, nach erfolgter Zentrierung die Drehsperre aufzuheben. Zur korrekten Anlage der Ausrichtflächen 49a und zur Anlage der Spannauflagen 49 (Fig. 7 bis 9) ist nämlich eine freie Drehbarkeit des Zentrierdorns notwendig. Die Anschläge 76a, 76b werden dabei in ihre offene Stellung gemäß Fig. 14b bewegt. Nachdem der Zentrierdorn 29 aus dem Werkstück 44 entfernt worden ist, oder bereits parallel zur Rückzugbewegung, werden die Anschläge 76a, 76b wieder in die geschlossene Stellung gemäß Fig. 14a gebracht, damit der Zentrierdorn eine definierte radiale Ausrichtung aufweist. Sie ist für die korrekte Ablage im Werkzeugmagazin 31 erforderlich, gegebenenfalls auch für den korrekten Eingriff eines Werkzeugwechselgreifers. Beim Entnehmen des Zentrierdorns 29 aus der Spindel erfolgt dann eine (nicht gezeigte) mechanisch gesteuerte Zwangsverriegelung des Drehlagers 71, zum Beispiel durch selbsttätige Einrastung eines Bolzens. Dadurch wird sichergestellt, dass sich der Stützarm 74 beim nächsten Einwechseln in die Hauptspindel 28 in der korrekten radialen Position zwischen den Anschlägen 76a, 76b befindet.

## Patentansprüche

1. Verfahren zum Zentrieren von Werkstücken (44), bei dem expandierbare Zentrierelemente (30) eines Zentrierdorns (29) an das Werkstück (44) angelegt werden, der mit einem Spannkegel (53) in die Spindel (28) einer Bearbeitungsmaschine eingesetzt wird, wobei das Werkstück (44) zur Aufnahme des Zentrierdorns (29) eine Bohrung aufweist, **dadurch gekennzeichnet, dass** die Bohrung des Werkstückes (44) in derselben Aufspannung wie zum Zentrieren und Spannen bearbeitet wird, wobei der Zentrierdorn (29) vor dem Bearbeitungsvorgang aus der Bohrung des Werkstückes (44) entfernt wird, dass der Zentrierdorn (29) und der Spannkegel (53) relativ zueinander gedreht werden, um die Zentrierelemente (30) zu betätigen, und dass der Zentrierdorn (29) während der Spindelrotation drehfest zum Maschinengestell abgestützt wird.

2. Verfahren nach Anspruch 1,
**dadurch gekennzeichnet, dass** der Zentrierdorn (29) automatisch in die Spindel (28) eingewechselt wird.

3. Verfahren nach Anspruch 1 oder 2,
**dadurch gekennzeichnet, dass** die Zentrierelemente (30) durch Rotation der Spindel (28) betätigt werden.

4. Verfahren nach einem der Ansprüche 1 bis 3,
**dadurch gekennzeichnet, dass** der Zentrierdorn (29) einem Werkzeugmagazin (31) entnommen wird, das vorteilhaft in W-Richtung verfahrbar ist.

5. Verfahren nach einem der Ansprüche 1 bis 4,
**dadurch gekennzeichnet, dass** die Spindel (28) zumindest in einer Achsrichtung verfahrbar ist.

6. Verfahren nach einem der Ansprüche 1 bis 5,
**dadurch gekennzeichnet, dass** der Zentrierdorn (29) im Pick-up-Verfahren aus dem Werkzeugmagazin (31) in die Spindel (28) eingewechselt wird.

7. Verfahren nach einem der Ansprüche 1 bis 5,
**dadurch gekennzeichnet, dass** der Zentrierdorn (29) mittels einer Greifeinrichtung in die Spindel (28) eingewechselt wird.

8. Verfahren nach einem der Ansprüche 1 bis 7,
**dadurch gekennzeichnet, dass** das Werkstück (44) im Bearbeitungsraum der Bearbeitungsmaschine zentriert wird.

9. Verfahren nach einem der Ansprüche 1 bis 8,
**dadurch gekennzeichnet, dass** das Werkstück (44) auf einem Werkstücktisch (43) der Bearbeitungsmaschine schwimmend gespannt wird, der vorteilhaft in Z-Richtung verfahrbar ist.

10. Verfahren nach einem der Ansprüche 1 bis 9,
**dadurch gekennzeichnet, dass** das Werkstück (44) nach dem Zentrieren gespannt wird.

11. Verfahren nach Anspruch 10,
**dadurch gekennzeichnet, dass** der Zentrierdorn (29) nach dem Spannen des Werkstückes (44) entfernt und in die Spindel (28) das für die nachfolgende Bearbeitung des Werkstückes (44) notwendige Werkzeug (32) eingewechselt wird.

12. Verfahren nach Anspruch 11,
**dadurch gekennzeichnet, dass** das Werkzeug (32) im Pick-up-Verfahren aus dem Werkzeugmagazin (32) von der Spindel (28) aufgenommen wird.

13. Verfahren nach Anspruch 11,
**dadurch gekennzeichnet, dass** das Werkzeug (32) mittels einer Greifeinrichtung in die Spindel (28) eingewechselt wird.

14. Verfahren nach einem der Ansprüche 1 bis 13,
**dadurch gekennzeichnet, dass** am Werkstück (44) mehrere Bearbeitungsvorgänge durchgeführt werden, wobei vorteilhaft je nach Bearbeitungsaufgabe unterschiedliche Werkzeuge (32) in die Spindel (28) eingewechselt werden.

15. Verfahren nach einem der Ansprüche 1 bis 14,
**dadurch gekennzeichnet, dass** die Zentrierachse des Werkstückes (44) identisch mit der Spindelachse ist.

16. Verfahren nach einem der Ansprüche 1 bis 15,
**dadurch gekennzeichnet, dass** das Werkstück (44) nach dem Zentrieren gegen Spannauflagen (49) gespannt wird.

17. Verfahren nach einem der Ansprüche 1 bis 16,
**dadurch gekennzeichnet, dass** das Werkstück (44) beim Zentrieren radial ausgerichtet wird.

18. Verfahren nach einem der Ansprüche 1 bis 17,
**dadurch gekennzeichnet, dass** der Zentrierdorn (29) zeitparallel zur Ent- oder Beladung des Werkstückes (44) in die Spindel (28) eingewechselt wird.

19. Verfahren nach einem der Ansprüche 1 bis 18,
**dadurch gekennzeichnet, dass** der Zentrierdorn (29) nach der Beladung des Werkstückes (44) eingewechselt wird.

20. Vorrichtung zur Durchführung des Verfahrens nach einem der Ansprüche 1 bis 19, mit wenigstens einem Zentrierdorn (29), mit dem Zentrierelemente (30) verstellbar sind und der mit einem Spannkegel (53) in eine Spindel (28) eingespannt ist,
**dadurch gekennzeichnet, dass** der Zentrierdorn (29) und der Spannkegel (53) relativ zueinander drehbar sind, um die Zentrierelemente (30) zu betätigen, und dass der Zentrierdorn (29) während der Spindelrotation drehfest zum Maschinengestell abgestützt wird.

21. Vorrichtung nach Anspruch 20,
**dadurch gekennzeichnet, dass** der Spannkegel (53) ein HSK-Kegel ist.

22. Vorrichtung nach Anspruch 20 oder 21,
**dadurch gekennzeichnet, dass** zwischen dem Zentrierdorn (29) und dem Spannkegel (53) ein Drehlager (71) angeordnet ist, das eine Drehbewegung ohne Axialbewegung zwischen dem Zentrierdorn (29) und dem Spannkegel (53) ermöglicht.

23. Vorrichtung nach einem der Ansprüche 20 bis 22,
**dadurch gekennzeichnet, dass** die Rotation der Spindel (28) durch einen Spindelantrieb (83) eine Axialbewegung einer Druckstange (59) bewirkt.

## Claims

1. Method for centring workpieces (44), in which expandable centring elements (30) of a centring mandrel (29) are put against the workpiece (44), the centring mandrel (29) is inserted into the spindle (28) of a machine tool by means of a clamping cone, whereby the workpiece (44) has a bore for receiving the centring mandrel (29), **characterised in that** the bore of the workpiece (44) is machined in the same fixture as for centring and clamping, whereby the centring mandrel (29) is removed out of the bore of the workpiece (44) before the processing procedure, that the centring mandrel (29) and the clamping cone (53) are rotated relatively to one another to actuate the centring elements (30), and that the centring mandrel (29) is supported in a non-rotatable manner to the machine frame during rotation of the spindle.

2. Method according to claim 1,
**characterised in that** the centring mandrel (29) is changed automatically into the spindle (28).

3. Method according to claim 1 or 2,
**characterised in that** the centring elements (30) are operated by rotation of the spindle (28).

4. Method according to one of the claims 1 to 3,
**characterised in that** the centring mandrel (29) is removed from a tool magazine (31), advantageously movable in the W-direction.

5. Method according to one of the claims 1 to 4,
**characterised in that** the spindle (28) is movable at least in one axial direction.

6. Method according to one of the claims 1 to 5,
**characterised in that** the centring mandrel (29) is removed from the tool magazine (31) and inserted into the spindle (28) using the pick-up method.

7. Method according to one of the claims 1 to 5,
**characterised in that** the centring mandrel (29) is inserted into the spindle (28) by means of a gripping device.

8. Method according to one of the claims 1 to 7,
**characterised in that** the workpiece (44) is centred in the machining space of the machine tool.

9. Method according to one of the claims 1 to 8,
**characterised in that** the workpiece (44) is floatingly clamped onto a work stand-table (43) of the machine tool, the work stand-table advantageously movable in the Z-direction.

10. Method according to one of the claims 1 to 9,
**characterised in that** the workpiece (44) is clamped after centring.

11. Method according to claim 10,
**characterised in that** the centring mandrel (29) is removed after clamping of the workpiece (44) and the tool (32) which is required for the subsequent machining of the workpiece (44) is inserted into the spindle (28).

12. Method according to claim 11,
**characterised in that** the tool (32) is removed from the tool magazine (32) and inserted into the spindle (28) using the pick-up method.

13. Method according to claim 11,
**characterised in that** the tool (32) is inserted into the spindle (28) by means
of a gripping device.

14. Method according to one of the claims 1 to 13,
**characterised in that** several machining operations are executed on the workpiece (44), whereby, depending on the machining task, different tools (32) are advantageously inserted into the spindle (28).

15. Method according to one of the claims 1 to 14,
**characterised in that** the centring axis of the workpiece (44) is identical with the axis of the spindle.

16. Method according to one of the claims 1 to 15,
**characterised in that** the workpiece (44) is clamped against clamping surfaces (49) after centring.

17. Method according to one of the claims 1 to 16,
**characterised in that** the workpiece (44) is radially positioned while centring.

18. Method according to one of the claims 1 to 17,
**characterised in that** the centring mandrel (29) is inserted into the spindle (28) simultaneously with the unloading or loading of the workpiece (44).

19. Method according to one of the claims 1 to 18,
**characterised in that** the centring mandrel (29) is inserted after the loading of the workpiece (44).

20. Device for carrying out the method according to one of the claims 1 to 19, with at least one centring mandrel (29), with which centring elements (30) are adjustable and which is clamped in a spindle (28) by means of a clamping cone (53),
**characterised in that** the centring mandrel (29) and the clamping cone (53) are rotatable relative to one another to operate the centring elements (30), and that the centring mandrel (29) is supported in a non-rotation manner to the machine frame during spindle rotation.

21. Device according to claim 20,
**characterised in that** the clamping cone (53) is a cone-type HSK.

22. Device according to claim 20 or 21,
**characterised in that** between the centring mandrel (29) and the clamping cone (53) a rotation bearing (71) is positioned, which allows a rotational movement without axial movement between the centring mandrel (29) and the clamping cone (53).

23. Device according to one of the claims 20 to 22,
**characterised in that** the rotation of the spindle (28) by a spindle drive (83) causes axial movement of a pressure rod (59).

## Revendications

1. Procédé destiné à centrer des pièces (44) à usiner, dans lequel des éléments de centrage (30) expansibles d'un mandrin de centrage (29) sont appliqués à la pièce (44), ce mandrin étant posé dans la broche (28) d'une machine outil par un cône de serrage (53), la pièce (44) comprenant un perçage pour la réception du mandrin de centrage (29),
**caractérisé en ce que** le perçage de la pièce (44) est usiné dans la même fixation que pour le centrage et le serrage, le mandrin de serrage (29) étant enlevé du perçage de la pièce (44) avant le processus d'usinage, et que le mandrin de centrage (29) et le cône de serrage (53) sont tournés relativement l'un par rapport à l'autre pour actionner les éléments de centrage (30), et que le mandrin de centrage (29) est appuyé, solidaire en rotation, face au bâti de machine.

2. Procédé selon revendication 1,
**caractérisé en ce que** le mandrin de centrage (29) est échangé automatiquement dans la broche (28).

3. Procédé selon revendication 1 ou 2,
**caractérisé en ce que** les éléments de centrage (30) sont actionnés par rotation de la broche (28).

4. Procédé selon l'une quelconque des revendications 1 à 3,
**caractérisé en ce que** le mandrin de centrage (29) est prélevé sur un magasin d'outil, avantageusement déplaçable en direction W.

5. Procédé selon l'une des revendications 1 à 4,
**caractérisé en ce que** la broche (28) est déplaçable au moins dans une direction d'axe.

6. Procédé selon l'une quelconque des revendications 1 à 5,
**caractérisé en ce que** le mandrin de centrage (29) est remplacé selon le procédé de Pick-up du magasin d'outil (31) dans la broche (28).

7. Procédé selon l'une quelconque des revendications 1 à 5,
**caractérisé en ce que** le mandrin de centrage (29) est remplacé à l'aide d'un dispositif preneur dans la broche (28).

8. Procédé selon l'une quelconque des revendications 1 à 7,
**caractérisé en ce que** la pièce (44) est centrée dans l'espace d'usinage de la machine-outil.

9. Procédé selon l'une quelconque des revendications 1 à 8,
**caractérisé en ce que** la pièce (44) est serrée de manière flottante sur une table d'usinage (43) de la machine-outil, la table d'usinage avantageusement déplaçable en direction Z.

10. Procédé selon l'une quelconque des revendications 1 à 9,
**caractérisé en ce que** la pièce (44) est serrée après le centrage.

11. Procédé selon revendication 10,
**caractérisé en ce que** le mandrin de centrage (29) est enlevé après le serrage de la pièce (44) et que l'outil (32) nécessaire à l'usinage suivant de la pièce (44) est échangé dans la broche (28).

12. Procédé selon revendication 11,
**caractérisé en ce que** l'outil (32) est reçu du magasin d'outil (32) dans la broche (28) de procédé de Pick-up.

13. Procédé selon revendication 11,
**caractérisé en ce que** l'outil (32) est échangé dans la broche (28) au moyen d'un dispositif preneur.

14. Procédé selon l'une quelconque des revendications 1 à 13, **caractérisé en ce que** plusieurs processus d'usinage sont exécutés à la pièce (44), des outils (32) différents étant échangés avantageusement dans la broche (28) suivant objectif d'usinage.

15. Procédé selon l'une quelconque des revendications 1 à 14,
**caractérisé en ce que** l'axe de centrage de la pièce (44) est identique à l'axe de la broche.

16. Procédé selon l'une quelconque des revendications 1à 15,
**caractérisé en ce que** la pièce (44) est serrée après le centrage contre des surfaces d'appui (49).

17. Procédé selon l'une quelconque des revendications 1 à 16,
**caractérisé en ce que** la pièce (44) est ajustée radialement pendant le centrage.

18. Procédé selon l'une quelconque des revendications 1a 17,
**caractérisé en ce que** le mandrin de centrage (29) est échangé simultanément au déchargement ou chargement de la pièce (44) dans la broche (28).

19. Procédé silon l'une quelconque des revendications 1 à 18,
**caractérisé en ce que** le mandrin de centrage (29) est échangé après le chargement de la pièce (44).

20. Dispositif destiné à la réalisation du procédé selon l'une quelconque des revendication 1 à 19, avec au moins un mandrin de centrage (29), avec lequel des éléments de centrage (30) sont ajustables et lequel est monté par un cône de serrage (53) dans une broche (28),
**caractérisé en ce que** le mandrin de centrage (29) et le cône de serrage (53) sont rotatifs relativement l'un par rapport à l'autre pour actionner les éléments de centrage (30), et que le mandrin de centrage (29) est supporté, solidairement en rotation, contre le bâti de machine pendant la rotation de la broche.

21. Dispositif selon revendication 20,
**caractérisé en ce que** le cône de serrage (53) est un cône HSK.

22. Dispositif selon revendication 20 ou 21,
**caractérisé en ce qu'**un palier tournant (71) est disposé entre le mandrin de centrage (29) et le cône de serrage (53), ce qui rend possible un mouvement tournant sans mouvement axial entre le mandrin de centrage (29) et le cône de serrage (53).

23. Dispositif selon l'une quelconque des revendications 20 à 22,
**caractérisé en ce que** la rotation de la broche (28) par un entraînement de broche (83) provoque un mouvement axial d'une barre de pression (59).
